(19) Europäisches Patentamt
European Patent Office
Office européen des brevets

(11) Veröffentlichungsnummer : **0 008 061**
**B1**

(12) **EUROPÄISCHE PATENTSCHRIFT**

(45) Veröffentlichungstag der Patentschrift : **29.07.81**

(21) Anmeldenummer : **79102710.5**

(22) Anmeldetag : **30.07.79**

(51) Int. Cl.³ : **A 01 N 31/08**, C 07 C 69/63, C 07 C 69/65, C 07 C 69/773, C 07 C 69/78, A 01 N 31/12, B 27 K 3/40, C 08 K 5/13, D 06 M 13/20// C07C37/62, C07C37/00, C07C39/27

(54) **Neue halogenierte Phenolester, diese enthaltende antimikrobielle Mittel und deren Verwendung.**

(30) Priorität : **08.08.78 CH 8473/78**

(43) Veröffentlichungstag der Anmeldung : **20.02.80 (Patentblatt 80/04)**

(45) Bekanntmachung des Hinweises auf die Patenterteilung : **29.07.81 Patentblatt 81/30**

(84) Benannte Vertragsstaaten : **CH DE FR GB IT SE**

(56) Entgegenhaltungen : **Keine**

(73) Patentinhaber : **CIBA-GEIGY AG**
**Patentabteilung Postfach**
**CH-4002 Basel (CH)**

(72) Erfinder : **Muntwyler, René, Dr.**
**Hutmattweg 6**
**CH-4114 Hofstetten (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 17, rue du Louvre, 75001 Paris, France

# Neue halogenierte Phenolester, diese enthaltende antimikrobielle Mittel und deren Verwendung

Die vorliegende Erfindung betrifft neue halogenierte Phenolester, diese enthaltende antimikrobielle Mittel und deren Verwendung zum Schützen von organischen Materialien vor dem Befall durch Mikroorganismen, insbesondere zur Keimfrei-, Verrottungsschutz- und Schimmelschutz-Ausrüstung von Textilfasern, zum Schutz von Holz vor Verrottung und zur Verhinderung der durch Mirkroorganismen hervorgerufenen Schleimbildung bei der Papierherstellung.

Aus Journal of the Scientific Research Institute *46* (1952), 113-117 und *48* (1954), 38-48 (S. Sakai et al.) ist bekannt, dass Fettsäureester von verschiedenen Polychlorphenolen, z.B. von Trichlor- und Tribromphenolen, fungistatische Wirkung besitzen und besonders zur Chemotherapie gegen Trichophyton-Infektionen geeignet sind. Diese Verbindungen sind jedoch für die der vorliegenden Erfindung zugrunde liegenden Aufgaben nicht geeignet, da sie entweder Lücken im Wirkungsspektrum aufweisen, nicht hinreichend witterungsbeständig, für einzelne Substrate ungeeignet und schlecht zugänglich sind oder hohe Dosierung erfordern oder aus anderen Gründen in der Praxis für die Zwecke der Erfindung nicht oder nur beschränkt einsetzbar sind.

Es wurde nun überraschenderweise gefunden, dass eine ausgewählte Gruppe von Trihalogenphenolestern eine ausgezeichnete antimikrobielle Aktivität besitzt, dass jene viele Nachteile der bekannten Halogenphenolester nicht aufweisen und dass diese neuen Phenolester sich daher ausgezeichnet zum Schützen von organischen und anorganischen Materialien, vorzugsweise zum Schützen von natürlichen Textilfasern, Papiermassen, industriellen Wasserkreisläufen, von Holz, verschiedenen Oberflächen usw., vor Mikroorganismen, insbesondere vor dem Befall durch Bakterien, Algen und besonders Pilzen und damit auch vor Verrottung und Schimmelbefall, eignen.

Die erfindungsgemässen Phenolester entsprechen der Formel

(1) 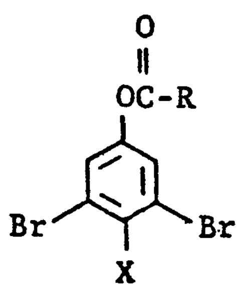 bzw. 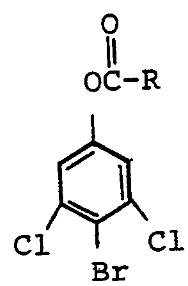 (1a) ,

worin X Chlor oder Fluor und R Wasserstoff, Alkyl mit 1 bis 22 C-Atomen, Alkenyl mit 2 bis 22 C-Atomen, unsubstituiertes oder mit Chlor- oder Bromatomen substituiertes Benzyl oder unsubstituiertes oder mit Alkyl oder Alkoxy mit jeweils 1 bis 4 C-Atomen, Carboxy, Chlor und/oder Brom substituiertes Phenyl bedeuten.

Ein Phenylrest R kann hierbei 1 bis 3 der in der Definition angegebenen Substituenten enthalten, bevorzugt ist jedoch nur 1 Substituent.

Bevorzugt sind aber Verbindungen der Formel (1), worin X Chlor bedeutet, und der Formel (1a), insbesondere jede der Formel (1), worin X Chlor bedeutet.

Von besonderem Interesse sind dabei die Verbindungen der Formel

(2) 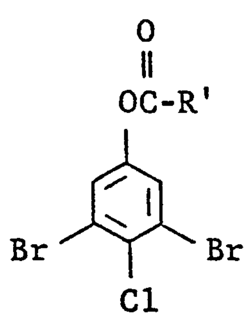 bzw. 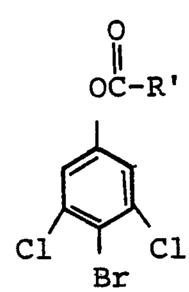 (2a)

worin R' Alkyl mit 1 bis 22 C-Atomen, Alkenyl mit 2 bis 22 C-Atomen, Phenyl oder Benzyl bedeutet, insbesondere jene der Formel (2).

Bevorzugt im Rahmen der Formel (1) bzw. (1a) sind die Verbindungen der Formel

(3) 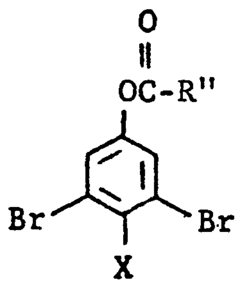 bzw. 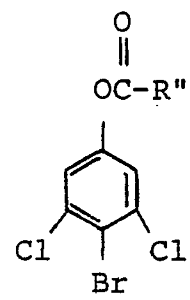 (3a)

worin X Chlor oder Fluor und R'' Alkyl mit 10 bis 22 C-Atomen oder Alkenyl mit 10 bis 18 C-Atomen bedeuten, insbesondere jene der Formel (3).

Die Erfindung betrifft auch ein Verfahren zum Schützen von organischen oder anorganischen Materialien vor dem Befall durch Mikroorganismen, das dadurch gekennzeichnet ist, dass man eine oder mehrere der in den Formeln (1) bis (3) bzw. (1a) bis (3a) definierten Verbindungen diesen Materialien einverleibt oder auf deren Oberfläche aufbringt.

Die vorliegende Erfindung betrifft ferner antimikrobielle Mittel, die durch einen bestimmten Gehalt an einer oder mehreren der in den Formeln (1) bis (3) bzw. (1a) bis (3a) definierten Verbindungen gekennzeichnet sind. Je nach Anwendung des Verfahrens können diese Mittel verschiedene Hilfsmittel und Lösungsmittel enthalten. Die erfindungsgemässen Phenolester sind gut in organischen Lösungsmitteln und in Treibgasen für Aerosole löslich. Die erfindungsgemässen Mittel können daher solche Lösungsmittel und Treibgase enthalten, wenn ein Aufsprühen oder Auftragen auf Oberflächen erwünscht ist. Natürlich können die erfindungsgemässen Verbindungen auch in Wasser dispergiert oder emulgiert angewendet werden. Weitere Hilfsstoffe, die in erfindungsgemässen Mitteln enthalten sein können, sind in der weiter unten folgenden Zusammenstellung der Anwendungsgebiete der Verbindungen der Formel (1) bzw. (1a) angeführt. Vorerst seien als derartige Hilfsstoffe erwähnt: Anionaktive Netzmittel, wie Seifen, Benzolsulfonate, kationaktive Netzmittel wie Alkyl-argyl-sulfat, nichtionogene Netzmittel, wie Polyglykoläther und höhere Fettalkohole, Komplexbildner, wie Natriumhexametaphosphat, Duftstoffe, Weichmacher, Enthärtungsmittel, Füllstoffe, wie Silikate, Carbonate und/oder Stärkederivate usw.

Die erfindungsgemässen Verbindungen können natürlich auch mit einem festen Träger zu z.B. pulverförmigen Mitteln formuliert werden.

Die erfindungsgemässen Phenolester zeigen ein breites antimikrobielles Wirkungsspektrum und weisen sowohl mikrobistatische als auch mikrobizide Wirksamkeit auf. Gute Wirkung wird beobachtet sowohl gegen grampositive und gramnegative Bakterien und Algen als auch vor allem gegen Pilze und Hefen. In anwendungstechnischer Hinsicht ist die Farb- und Geruchlosigkeit der neuen Verbindungen von besonderer Bedeutung.

Entsprechend ihrem breiten antimikrobiellen Wirkungsspektrum können die erfindungsgemässen Phenolester zum Schützen der verschiedensten organischen und anorganischen Substrate vor Mikroorganismen in einem weiten Bereich der Technik und Industrie angewendet werden. Vor allem sind die Phenolester geeignet für Konservierungs- und Desinfektionszwecke und für Keimfrei- und Verrottungsschutzausrüstungen.

Besonders das Schützen von diversen Materialien organischen Ursprungs vor durch Bakterien und Pilze hervorgerufener Verrottung ist zu erwähnen. Besonders hervorzuheben ist die hervorragende Wirksamkeit der erfindungsgemässen Phenolester gegen Pilze und Hefen. Vor allem auf diesem Gebiet übertreffen sie ähnliche, aus dem Stand der Technik bekannte Verbindungen. Daher sind alle jene Anwendungsgebiete, in denen die erfindungsgemässen Phenolester eingesetzt werden, besonders bevorzugt, in denen eine Wirkung gegen verschiedenste Pilze erwünscht ist (z.B. Verrottungsschutz, Schutz vor Schimmelbefall etc.)

Im folgenden seien einige Anwendungsgebiete schwerpunktmässig angeführt:

Vorzugsweise werden die erfindungsgemässen Verbindungen zur konservierenden und desinfizierenden Ausrüstung von Fasern und Textilien verwendet, wobei die Wirkstoffverbindungen auf natürliche und künstliche, vorzugsweise natürliche Fasern, z.B. aus Cellulose, aufgebracht werden und dort eine dauerhafte Wirkung gegen schädliche (auch pathogene) Mikroorganismen, z.B. Pilze und Bakterien, entfalten. Der Zusatz der Verbindungen kann dabei vor, gleichzeitig mit, oder nach einer Behandlung dieser Textilien mit anderen Stoffen, z.B. Farb- oder Druckpasten, Flammfestmitteln, Weichgriffmitteln und anderen Appreturen usw. erfolgen.

Derart behandelte Textilien weisen einen Schutz vor Verrottung, wie sie durch Mikroorganismen bedingt ist, auf.

Die Anwendungsformen der erfindungsgemässen Wirkstoffe können den üblichen Formulierungen entsprechen. Die zum Ausrüsten bzw. zum Schützen von Textilien verwendeten Mittel sollten die erfindungsgemässen Verbindungen in fein verteilter Form enthalten. Zur Anwendung kommen deshalb

insbesondere Lösungen, Dispersionen und Emulsionen der Wirkstoffe. Wässrige Dispersionen können beispielsweise aus Pasten oder Konzentraten erhalten werden und flüssig oder als Aerosol angewendet werden.

Die wässrigen Lösungen bzw. Dispersionen enthalten demnach zweckmässig Tenside, beispielsweise anionaktive Verbindungen, wie Seifen und andere Carboxylate (z.B. Alkalisalze höherer Fettsäuren), Abkömmlinge von Schwefel-Sauerstoffsäuren (z.B. Natriumsalz der Dodecylbenzolsulfonsäure, wasserlösliche Salze von Schwefelsäuremonoestern höhermolekularer Alkohole oder ihrer Polyglykoläther, wie etwa lösliche Salze von Dodecylalkohol-sulfat oder von Dodecylalkoholpolyglykoläthersulfat), Abkömmlinge von Phosphor-Sauerstoffsäuren (z.B. Phosphate), Abkömmlinge mit saurem (elektrophilem) Stickstoff in der hydrophilen Gruppe (z.B. Disulfinsalze), kationaktive Tenside, wie Amine und ihre Salze (z.B. Lauryl-diäthylentriamin), Oniumverbindungen, Aminoxyde oder nichtionogene Tenside, wie Polyhydroxyverbindungen, Tenside auf Mono- oder Polysaccharidbasis, höhermolekulare Aethylenglykole, Polyglykoläther (z.B. Polyglykoläther höherer Fettalkohole, Polyglykoläther höhermolekular-alkylierter Phenole). Daneben kann die Flotte auch noch übliche Hilfsstoffe, wie wasserlösliche Perborate, Polyphosphate, Carbonate, Silikate, optische Aufheller, Weichmacher, sauer reagierende Salze, wie Ammonium- oder Zinksilikonfluorid, oder gewisse organische Säuren, wie Oxalsäure, ferner Appreturmittel, z.B. solche auf Kunstharzbasis oder Stärke, enthalten.

Die Textilmaterialien können z.B. durch heisse oder kalte Färbe-, Bleich-, Chromierungs- oder Nachbehandlungsbäder mit den Wirkstoffen imprägniert werden, wobei verschiedene Textilausrüstungsverfahren, wie z.B. das Foulard- oder Ausziehverfahren, in Frage kommen.

Die Behandlung erfolgt zweckmässig bei Temperaturen von 10 bis 100 °C, beispielsweise bei 10 bis 70 °C, vorzugsweise etwa bei Raumtemperatur.

Wegen der guten Löslichkeit in organischen Lösungsmitteln eignen sich die Verbindungen der Formel (1) bzw. (1a) auch gut zur Applikation aus nicht-wässrigen Medien. Dabei können die auszurüstenden bzw. zu schützenden Materialien einfach mit den Lösungen imprägniert werden.

Als organische Lösungsmittel kommen beispielsweise Trichloräthylen, Methylenchlorid, Kohlenwasserstoffe, Propylenglykol, Methoxyäthanol, Aethoxyäthanol, Dimethylformamid in Frage, denen noch Verteilungsmittel (z.B. Emulgatoren, wie sulfiertes Ricinusöl, Fettalkoholsulfate usw.) und/oder andere Hilfsstoffe zugesetzt werden können.

Der Gehalt an erfindungsgemässen Wirkstoffen kann je nach Anwendungszweck zwischen 0,1 und 50 g, vorzugsweise zwischen 1 und 30 g Wirksubstanz pro Liter Behandlungsflüssigkeit lieren,

Die Wirkstoffe können allein oder zusammen mit anderen bekannten antimikrobiellen Textilschutzmitteln angewendet werden.

Als Textilien, die ausgerüstet bzw. geschützt werden, kommen hauptsächlich Fasern natürlicher Herkunft, wie cellulosehaltige, z.B. Baumwolle, oder polypeptidhaltige, z.B. Wolle oder Seide, aber auch synthetischer Herkunft, wie solche auf Polyamid-, Polyacrylnitril- oder Polyesterbasis, oder Mischungen dieser Fasern in Betracht.

Die Menge an auf die Textilmaterialien applizierter Wirkstoffverbindung beträgt vorzugsweise mindestens 100 ppm, bezogen auf das Material.

Meistens werden die Textilien mit einer Menge von 100 bis 10'000, vorzugsweise 200 bis 5'000 ppm an Wirkstoff, bezogen auf das Gewicht der textilen Materialien, ausreichend gegen Pilz- und Bakterienbefall geschützt. Die erfindungsgemässen Verbindungen verleihen den Textilien einen besonders lang andauernden Schutz vor Mikroorganismen.

Durch Kombination der erfindungsgemässen Verbindungen mit grenzflächenaktiven, insbesondere waschaktiven Stoffen gelangt man zu Reinigungsmitteln mit ausgezeichneter antibakterieller bzw. antimykotischer Wirkung.

Die Reinigungsmittel können in beliebiger, z.B. flüssiger, breiartiger, fester, flockiger oder körniger Form vorliegen. Die Wirkstoffverbindungen können sowohl in anionaktive Verbindungen, wie Seifen und andere Carboxylate (z.B. Alkalisalze höherer Fettsäuren), Abkömmlinge von Schwefelsauerstoffsäuren (z.B. Natriumsalz der Dodecylbenzolsulfonsäure, wasserlösliche Salze von Schwefelsäuremonoestern höhermolekularer Alkohole oder ihrer Polyglykoläther, wie etwa lösliche Salze von Dodecylalkoholsulfat oder von Dodecylalkoholpolyglykoläthersulfat), Abkömmlinge von Phosphor-Sauerstoffsäuren (z.B. Phosphate), Abkömmlinge mit saurem (elektrophilem) Stickstoff in der hydrophilen Gruppe (z.B. Disulfinsalze), als auch in kationaktive Tenside, wie Amine und ihre Salze (z.B. Lauryldiäthylentriamin), Oniumverbindungen, Aminoxyde oder nicht-ionogene Tenside, wie Polyhydroxyverbindungen, Tenside auf Mono- oder Polysaccharid-Basis, höhermolekulare Aethylenglykole, Polyglykoläther (z.B. Polyglykoläther höherer Fettalkohole, Polyglykoläther höhermolekularer alkylierter Phenole), bzw. Gemische aus verschiedenartigen Tensiden eingearbeitet werden. Dabei bleibt ihre antimikrobielle Wirksamkeit in vollem Umfange erhalten. Der Wirkstoffgehalt der Reinigungsmittel, bezogen auf das Gewicht dieses Mittels, beträgt im allgemeinen 0,1 bis 20 %, meistens 0,1 bis 3 %. Wässrige Zubereitungen solcher Reinigungsmittel, welche die Wirkstoffverbindungen enthalten, können z.B. zur antimikrobiellen Ausrüstung von Textilmaterialien verwendet werden ; Sie eignen sich ebenfalls als antimikrobielle Reinigungsmittel in der Lebensmittel- und Getränkeindustrie, z.B. in Brauereien, Molkereien, Käsereien, Stallungen und Schlachthöfen.

Ferner können die erfindungsgemässen Verbindungen der Formel (1) bzw. (1a) zum Schützen

verschiedenster Oberflächen vor Bakterien- und Pilzbefall verwendet werden. Hier sei vor allem die Behandlung von Holz (als Rohprodukt), verarbeiteten Gegenständen aus Holz, Holzspänen, Sägemehl, Leder, Häuten und Fellen zu erwähnen. Aber auch Desinfektion und Schutz von Behältern, in denen etwa technische Formulierungen aufbewahrt werden, von Böden und Wänden von Stallungen, Schlachthöfen usw. ist mit Hilfe des erfindungsgemässen Verfahrens möglich. Die erwähnten Gegenstände bzw. Oberflächen werden mit einer den Wirkstoff enthaltenden, wässrigen oder organischen Lösung bzw. Dispersion je nach Gestalt des zu schützenden Gegenstandes besprüht, (z.B. mit Hilfe eines Sprays), angestrichen oder getränkt (z.B. Holz, Leder).

Als organische Lösungsmittel seien beispielsweise mit Wasser nicht mischbare Lösungsmittel, insbesondere Petrolfraktionen, aber auch mit Wasser mischbare Lösungsmittel wie niedere Alkohole (z.B. Aethanol, Methanol), Aethylenglykolmonomethyläther oder -monoäthyläther genannt.

Vorzugsweise wird dabei so viel des erfindungsgemässen Mittels angewendet, dass der jeweilige Gegenstand nach der Behandlung etwa 0,1 bis 10 $g/m^2$ an Wirkstoff enthält. Bei der Behandlung von Holz kann vor allem die bei der Lagerung durch verschiedene Fungi hervorgerufene Verfärbung und die Verrottung verhindert bzw. verzögert werden.

Auch in der Zellstoff- und Papierindustrie können die Verbindungen der Formel (1) bzw. (1a) und das erfindungsgemässe Verfahren angewendet werden. Hier wird damit vor allem die durch Mikroorganismen hervorgerufene Schleimbildung in den zur Papiergewinnung verwendeten Apparaturen verhindert. Zu diesem Zweck wird die entsprechende Wirkstoffverbindung entweder der Papiermasse oder dem Wasserkreislauf in der Papierfabrik zugesetzt. Auch in anderen Industrieanlagen, in denen Beeinträchtigungen durch Mikroorganismen zu erwarten sind, kann das erfindungsgemässe Verfahren in analoger Form angewendet werden. Die Menge an Wirkstoff soll in der Regel mindestens 100 ppm, in der Praxis etwa 100 bis 10'000, vorzugsweise 200 bis 5'000 ppm betragen. Bei Zusatz zu Wasserkreisläufen genügt oft schon eine Konzentration von 10 ppm.

Ein weiteres mögliches Anwendungsgebiet betrifft die Konservierung von technischen Formulierungen. Von diesen seien beispielsweise aufgezählt : Leime, Bindemittel, Anstrichmittel, Textilhilfsmittel bzw. Veredlungsmittel, Farb-, bzw. Druckpasten, Lacke und ähnliche Zubereitungen auf der Basis von organischen und anorganischen Farbstoffen bzw. Pigmenten, auch solche, welche als Beimischung Casein oder andere organische Verbindungen enthalten. Auch Wand- und Deckenanstriche, z.B. solche, die ein eiweisshaltiges Farbbindemittel enthalten, werden durch einen Zusatz von erfindungsgemässen Verbindungen vor dem Befall durch Mikroorganismen geschützt.

Weiters sind als Anwendungsgebiete zu erwähnen : Konservierung von Klebstoffen auf Wassergrundlage, z.B. von Tapetenklebstoffen, vor allem vor dem Befall durch Pilze, Verhinderung und Bekämpfung von Bakterien- und Pilzinfektionen in tierischen Oelen, Fetten und Oelemulsionen, wie Schneidölen, Bohrölen. Werden Anstrichmittel, Lacke und Farben mit Hilfe von erfindungsgemässen Verbindungen konserviert, sind auch die daraus hergestellten Anstrichfilme vor dem Befall vor allem durch Pilze geschützt. Auch Weichmacher, Permanentschlichten (z.B. auf Basis von Polyvinylalkohol) oder Stärkeschlichten können ebenfalls geschützt werden. Kunststoffmassen aller Art, z.B. aus Polyamiden, Polycarbonaten, Polyestern, Polyvinylchlorid, Polypropionat oder Polyvinylalkohol werden ebenfalls vorteilhaft durch erfindungsgemässe Verbindungen vor Bakterien- und Pilzbefall geschützt. Bei Verwendung von Weichmachern ist es vorteilhaft, den antimikrobiellen Zusatz dem Kunststoff im Weichmacher gelöst bzw. dispergiert zuzusetzen. Zweckmässig ist für eine möglichst gleichmässige Verteilung im Kunststoff Sorge zu tragen. Die erhaltenen Kunststoffe können für Gebrauchsgegenstände aller Art, bei denen eine Wirksamkeit gegen verschiedenste Keime, wie z.B. Bakterien und Pilze, erwünscht ist, Verwendung finden, so z.B. für Fussmatten, Badezimmervorhänge, Sitzgelegenheiten, Trittroste in Schwimmbädern, Wandbespannungen etc. Durch Einverleibung in entsprechende Wachs- und Bohnermassen erhält man Fussboden- und Möbelpflegemittel mit desinfizierender Wirkung.

Diesen genannten Formulierungen wird zur Erzielung des gewünschten Effektes die Wirkstoffverbindung der Formel (1) bzw. (1a) beigemischt und darin möglichst homogen verteilt. Die Wirkstoffverbindung kann dazu als solche in der entsprechenden Menge oder gelöst oder dispergiert in einem Lösungs- oder Dispersionsmittel, das gegebenenfalls noch weitere Hilfsstoffe enthält, eingesetzt werden. Die Menge an Wirkstoff soll mindestens 100 ppm, bezogen auf das zu schützende Material, betragen, aus praktischen Gründen kommen etwa 100 bis 10'000, vorzugsweise 200 bis 5'000 ppm in Frage.

Die erfindungsgemässen Phenolester können auch in Kombination mit anderen Desinfektions- und Konservierungsmitteln eingesetzt werden, wobei häufig noch eine Steigerung der Wirkung erzielt wird. Zu erwähnen wären hierbei Kombinationen mit anderen Phenolderivaten, Aldehyden (z.B. Formaldehyd, Salicylaldehyd), Alkoholen, Carbonsäuren und deren Derivaten, metallorganischen Verbindungen (z.B. Tributylzinnoxid), Halogene und Halogenverbindungen (z.B. Chlor und Jod-Verbindungen), Kohlensäurederivaten (z.B. Dimethyl- oder Diäthyldicarbonat), Aminen und quartären Ammoniumverbindungen, Phosphoniumverbindungen, Sulfoniumverbindungen und Heterocyclen (z.B. Halogenierte und/oder quaternierte Pyridinderivate).

Die erfindungsgemässen Verbindungen der Formel (1) können nach bekannten Veresterungsverfahren erhalten werden. So kann 3,5-Dibrom-4-chlorphenol, 3,5-Dibrom-4-fluorphenol bzw. 3,5-Dichlor-4-bromphenol mit einer Carbonsäure der Formel R—COOH (R wie in Formel (1) bzw. (1a) definiert) in einem inerten Lösungsmittel und in Gegenwart eines wasserabspaltenden Mittels umgesetzt werden. Alternativ

können die erwähnten Phenole auch in einem inerten Lösungsmittel mit einem Carbonsäurehalogenid der Formel R—COX (R wie oben definiert, X = Cl, Br) in Gegenwart eines säurebindenden Mittels oder mit einem Carbonsäureester R—$COOR_1$ (R wie oben definiert, $R_1$ = Alkyl, Benzyl oder Phenyl) unter Abspaltung des Alkohols $R_1OH$ umgesetzt werden. Als säurebindende Mittel kommen unter anderen tertiäre Amine, wie Trialkylamin und Pyridin, Hydroxide, Oxide, Carbonate und Bicarbonate von Alkali- und Erdalkalimetallen, Alkalimetallalkoholate wie K-t-butylat oder Na-Methylat in Betracht. Als wasserbindendes Mittel kann beispielsweise Dicyclohexylcarbodiimid verwendet werden. Die Reaktionstemperatur kann zwischen – 10 und 120 °C, besonders zwischen 20 und 80 °C liegen. Als Lösungs- bzw. Verdünnungsmittel eignen sich unter anderen Aether und ätherartige Verbindungen wie Diäthyläther, Dipropyläther, Dioxan, Dimethoxyäthan und Tetrahydrofuran; Amide wie N,N-dialkylierte Carbonsäureamide; aliphatische, aromatische sowie halogenierte Kohlenwasserstoffe, insbesondere Benzol, Toluol, Xylol, Chloroform und Chlorbenzol; Nitrile wie Acetonitril; Dimethylsulfoxid und Ketone wie Aceton oder Methyläthylketon.

Die Säuren der Formel R—COOH bzw. die Halogenide und Ester davon sind bekannt oder können nach bekannten Verfahren leicht hergestellt werden.

3,5-Dibrom-4-chlorphenol bzw. 3,5-Dibrom-4-fluorphenol können nach einem der folgenden Verfahren erhalten werden:

1) Nach dem von M. Kohn et al. beschriebenen Verfahren (Monatshefte der Chemie 47 (1927), 207-240) nach folgendem Schema:

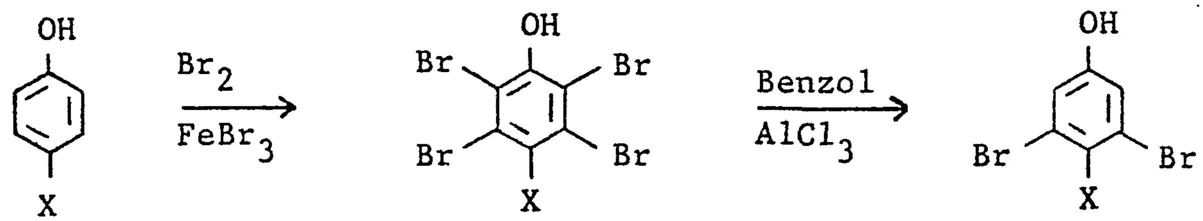


(X = Cl oder F)

2) 1. Stufe wie unter 1); Debromierung kathodisch analog zu M. Busch et al., Chem. Berichte 70 (1937), 744:

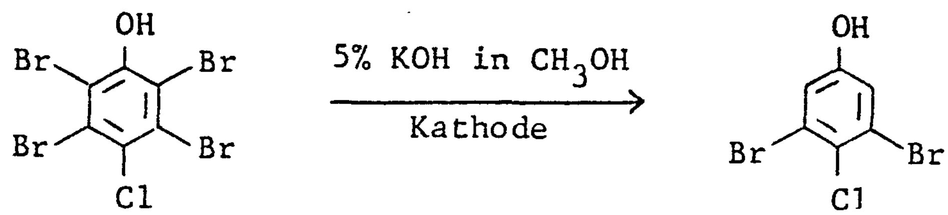


oder analog zu H. Hoffmann et al., Chem. Berichte 95 (1962), 523:

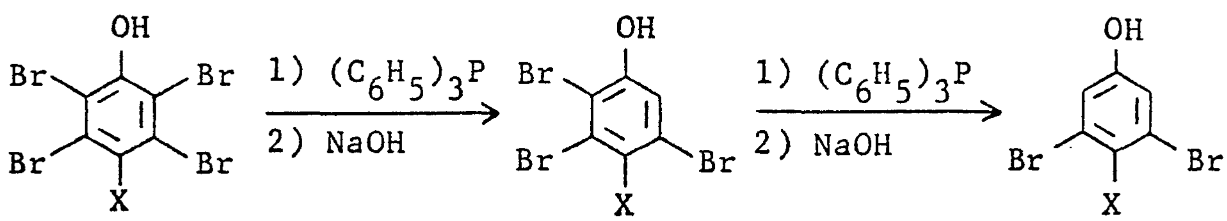


(X = Cl oder F)

3) Nach dem Schema:

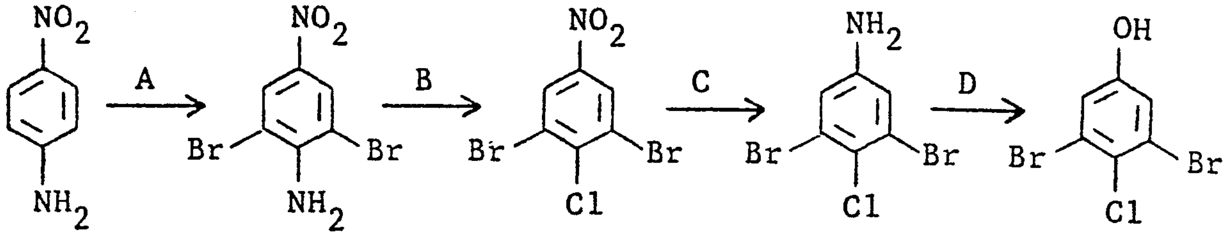


Stufe A analog Shepherd, J. Org. Chem. 12 (1947), 275, 281
Stufen B und C analog M.A.F. Hollemann, Rec. trav. chim. 37 (1917), 195
Stufe D analog G.J. Tiessens, Rec. trav. chim. 50 (1931), 112.

4) 3,5-Dibrom-4-chlorphenol kann auch nach dem Schema

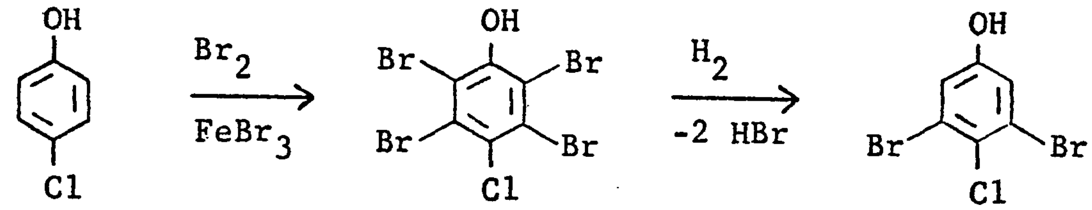


erhalten werden.

Die Bromierung erfolgt dabei wie üblich nach dem z.B. unter 1) angegebenen Verfahren. Die Debromierung wird katalytisch mit Hilfe eines Hydrierungskatalysators in einem organischen Lösungsmittel und in Anwesenheit einer starken Base (vorzugsweise KOH, NaOH oder Natriumacetat) im Ueberschuss (vorzugsweise etwa 2 Aequivalent pro Aequivalent Phenol) ausgeführt. Als Katalysator kommen vorzugsweise Raney-Nickel, Pd/Kohle oder Pd/$CaCO_3$, als Lösungsmittel Alkohole und cyclische Aether (z.B. Aethanol, Methanol, Dioxan) in Betracht. Siehe dazu auch H. Kämmerer et al., Chem. Berichte 91 (1958), 1 376 und M. Busch et al., Chem. Berichte 49 (1916), 1 063.

3,5-Dibrom-4-fluorphenol ist ausserdem in einem Artikel von L.M. Epshtein et al. in Bulletin of the Academy of Sciences of the USSR *1975,* 2 334-9 erwähnt.

Das ebenfalls als Ausgangsprodukt verwendete 3,5-Dichlor-4-bromphenol ist von W.S. Gump et al. in J. Soc. Cosmetic chemists *15,* 717 (1964) als Zwischenprodukt erwähnt. Es kann besonders vorteilhaft durch selektive Bromierung von 3,5-Dichlorphenol mit Brom hergestellt werden. Die Bromierung wird in Gegenwart eines Friedel-Crafts-Katalysators durchgeführt, zum Beispiel in Gegenwart von $ZnCl_2$, $AlBr_3$ oder vorzugsweise von $AlCl_3$. Zur Erhöhung der Selektivität kann zusätzlich noch Diphenylsulfid verwendet werden. Bevorzugt wird die Bromierung in Gegenwart von $AlCl_3$ und Diphenylsulfid ausgeführt. Als Reaktionsmedium wird ein inertes, vorzugsweise wasserfreies organisches, z.B. aprotisches Lösungsmittel verwendet. Bevorzugt sind hierbei wasserfreie halogenierte aliphatische Kohlenwasserstoffe wie z.B. Dichloräthan, Methylenchlorid, Tetrachloräthan, aber auch wasserfreie Aether wie Diäthyläther.

In den nachfolgenden Beispielen sind, soweit nicht anders angegeben, Teile Gewichtsteile und Prozent Gewichtsprozent.

## Beispiel 1

28,6 g 3,5-Dibrom-4-chlorphenol und 7,9 g Pyridin werden in 100 ml Toluol gelöst und bei Raumtemperatur mit einer Lösung von 21,9 g Laurinsäurechlorid in 30 ml Toluol versetzt. Das Reaktionsgemisch wird 2 1/2 Stunden bei 60 °C gehalten, auf Wasser ausgetragen und anschliessend mit Toluol extrahiert. Der Toluolextrakt wird mit Wasser gewaschen, getrocknet und eingedampft. Die ölige Substanz verfestigt sich im Kühlschrank und wird danach aus Methanol/Methylenchlorid umkristallisiert. Es werden 40,5 g der Verbindung der Formel

(10)

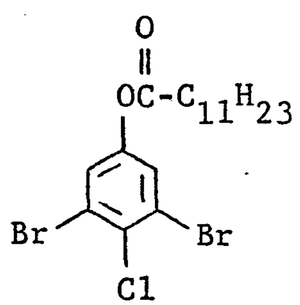

in Form von farblosen Kristallen mit einem Fp von 41 bis 42 °C erhalten.

## Beispiel 2

Verfährt man nach der in Beispiel 1 angegebenen Vorschrift und verwendet als Ausgangsmaterialien 3,5-Dibrom-4-chlorphenol, 3,5-Dibrom-4-fluorphenol oder 3,5-Dichlor-4-bromphenol und das entsprechende Carbonsäurechlorid, so erhält man die in der nachfolgenden Tabelle angeführten Verbindungen der Formel

(A) 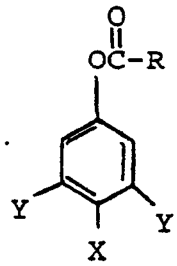

| Verb. Nr. | X | Y | R | Fp (°C) |
|---|---|---|---|---|
| 11 | Cl | Br | $C_9H_{19}$ | |
| 12 | Cl | Br | $C_{13}H_{27}$ | 52-53 |
| 13 | Cl | Br | $C_{17}H_{35}$ | 63-64 |
| 14 | Cl | Br | $C_{21}H_{43}$ | 69-72 |
| 15 | Cl | Br | $CH_2=CH-(CH_2)_8$ | farbl. Oel ($n_D^{20}$ = 1,5464) |
| 16 | Cl | Br | $C_{16}H_{33}$ | |
| 17 | Cl | Br | $CH_3(CH_2)_7CH=CH-(CH_2)_7$ | farbl. Oel ($n_D^{20}$ = 1,5248) |
| 18 | Cl | Br | $CH_2C_6H_5$ | 75-76 |
| 19 | Cl | Br | $C_6H_5$ | 130-131 |
| 20 | F | Br | $C_{11}H_{23}$ | |
| 21 | F | Br | $C_{17}H_{35}$ | |
| 22 | Cl | Br | $C_3H_7$ | farbl. Oel ($n_D^{20}$ = 1,5732) |
| 23 | F | Br | $CH_2C_6H_5$ | |
| 24 | Cl | Br | $CH_3$ | 150-152 |
| 25 | Br | Cl | $C_{11}H_{23}$ | 31 |
| 26 | Br | Cl | $C_{15}H_{31}$ | 54-55 |
| 27 | Br | Cl | $C_{21}H_{43}$ | 65-67 |
| 28 | Br | Cl | $C_2H_5$ | 43-45 |
| 29 | Br | Cl | $(CH_2)_7CH=CH(CH_2)_7CH_3$ | farbl. Oel ($n_D^{20}$ = 1,5160) |
| 30 | Br | Cl | 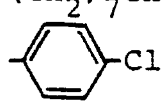 | 165-167 |

Die als Ausgangsprodukte verwendeten Halogenphenole können folgendermassen erhalten werden :

Verfahren A

a) 56 g 4-Fluorphenol werden in 400 ml Dichloräthan gelöst und mit 1,5 g Eisenpulver versetzt. Es wird auf 60 °C erwärmt und innerhalb einer Stunde werden unter Rühren 352 g Brom zugetropft. Die Temperatur wird 2 Stunden bei 60 °C gehalten, anschliessend auf Raumtemperatur abgekühlt und das Reaktionsgemisch unter kräftigem Rühren auf Wasser ausgetragen. Der abgeschiedene braune Niederschlag wird abgenutscht, erst mit Dichloräthan, dann mit Wasser gewaschen und im Vakuum getrocknet. Nach Umkristallisation aus Aethanol erhält man 170 g 2,3,5,6-Tetrabrom-4-fluorphenol in Form brauner Kristalle mit einem Fp von 178 bis 180 °C.

b) 83,6 g 2,3,5,6-Tetrabrom-4-fluorphenol werden in 270 g Benzol gelöst und unter Rühren mit 165,5 g Aluminiumchlorid versetzt. Es wird 4 Stunden unter Rühren bei Rückflusstemperatur gehalten. Nach Abkühlen wird das Reaktionsgemisch auf Eis/Wasser ausgetragen und mit Toluol extrahiert. Die Toluollösung wird mit 2N Natronlauge ausgeschüttelt, die alkalische wässrige Lösung mit Säure neutralisiert und erneut mit Toluol extrahiert. Der zweite Toluolextrakt liefert nach dem Waschen, Trocknen und Eindampfen 48,4 g dunkle Kristalle, die anschliessend zweimal aus Cyclohexan umkristallisiert werden, wobei man 29 g 3,5-Dibrom-4-fluorphenol in Form von bräunlichen Kristallen mit einem Fp von 93 bis 95 °C erhält.

Geht man von 4-Chlorphenol aus und verfährt nach den beiden Vorschriften a) und b), so erhält man 3,5-Dibrom-4-chlorphenol mit einem Schmelzpunkt von 120 bis 122 °C.

Verfahren B

a) 128,6 g 4-Chlorphenol werden in 800 ml Dichloräthan gelöst und mit 1 g Eisenpulver versetzt. Es wird auf 60 °C erhitzt und innerhalb einer Stunde werden unter Rühren 704 g Brom zugetropft. Die Temperatur wird 2 Stunden lang bei 60 °C gehalten, wobei sich eine dickflüssige Suspension bildet. Diese wird auf Raumtemperatur abgekühlt und unter kräftigem Rühren auf Wasser ausgetragen. Der abgeschiedene Niederschlag wird abgenutscht, erst mit Dichloräthan, dann mit Wasser gewaschen, im Vakuum getrocknet und aus Alkohol/Dioxan umkristallisiert. Man erhält so 380 g 2,3,5,6-Tetrabrom-4-chlorphenol in Form brauner Kristalle mit einem Fp von 210 bis 212 °C.

b) 8,9 g 2,3,5,6-Tetrabrom-4-chlorphenol werden in einer Mischung von 40 ml 1N methanolischer KOH und 60 ml Methanol gelöst und mit 4 g Raney-Nickel versetzt. Es wird 4 1/2 Stunden bei 20 °C mit Wasserstoff unter Normaldruck in einer Schüttelapparatur hydriert, wobei 98 % der Theorie Wasserstoff aufgenommen wird. Der Katalysator wird abfiltriert und das Filtrat eingedampft. Der Rückstand wird zweimal aus Cyclohexan umkristallisiert, wobei man 3,5 g 3,5-Dibrom-4-chlorphenol in Form von farblosen Kristallen mit einem Fp von 121 °C erhält.

Verfahren C

81,5 g 3,5-Dichlorphenol und 2,5 g Diphenylsulfid werden in 1 Liter wasserfreiem Aether gelöst. Danach werden 2,5 g wasserfreies Aluminiumchlorid zugegeben und innerhalb von 10 Minuten 80 g Brom bei Raumtemperatur zugetropft. Das Reaktionsgemisch wird dann 15 Stunden bei Rückflusstemperatur gerührt und danach auf Wasser ausgetragen. Die organische Phase wird abgetrennt, mit Wasser neutral gewaschen, getrocknet und eingedampft. Der feste Rückstand wird aus Cyclohexan umkristallisiert. Es werden so 72,6 g 3,5-Dichlor-4-bromphenol in Form farbloser Kristalle mit einem Schmelzpunkt von 118-120 °C erhalten.

Beispiel 3

Prüfung der bakteriziden und fungiziden Aktivität der Wirkstoffverbindungen nach dem Agar-Inkorporationstest :

Von den Verbindungen der Formeln (10) bis (30) wird jeweils eine 5 %ige Stammlösung in Aethylenglykolmonomethyläther bereitet. Von dieser Stammlösung wird eine Verdünnungsreihe bereitet, sodass sich die Konzentrationen in den einzelnen Lösungen um jeweils eine Zehnerpotenz unterscheiden. Von den so erhaltenen Lösungen werden jeweils 0,3 ml in sterile Petrischalen vorgelegt und mit jeweils 15 ml heissem, flüssigem Nährmedium (Nutrient-Agar) vermischt. Im Nährmedium sind dann 1'000, 100, 10, 1 und 0,1 ppm an Aktivsubstanz enthalten.

Nach dem Erstarren der Platten werden auf diese mit einer Pasteurpipette bzw. mit dem Impfapparat die jeweiligen Keimsuspensionen (es werden dieselben Bakterien wie im folgenden Beispiel 4 sowie Aspergillus niger verwendet) aufgetropft. Die Inkubationszeit für Bakterien beträgt 24 Stunden bei 37 °C, für Aspergillus niger 3 Tage bei 28 °C. Es wird danach beurteilt, bis zu welcher Konzentration an Wirksubstanz eine Vermehrung der Keimzahlen festzustellen ist. Alle geprüften Verbindungen zeigen eine gute bakteriostatische bzw. fungistatische Wirkung gegenüber den geprüften Keimen.

Beispiel 4

Jeweils eine der Verbindungen der Formeln (10) bis (30) wird in einer geeigneten Formulierung (Aethylglykol/Dimethylformamid) gelöst. Die unten aufgeführten drei Textilsubstrate werden in die Formulierbäder eingelegt und anschliessend zwischen 2 Aluminiumfolien abgequetscht und darauf luftgetrocknet. Die Abquetschung wird so durchgeführt, dass sich 1'000 ppm Wirksubstanz auf dem Gewebe befinden.

1. Baumwolle renforcé, laugiert, gebleicht $m^2$-Gewicht : 121 g
2. Polyamid, Nylon-Stapelgewebe, fixiert, gebleicht $m^2$-Gewicht : 140 g
3. Polyester, Dacron®-Stapelgewebe, Typ 54, fixiert, gebleicht $m^2$-Gewicht : 130 g.

Die Substrate werden darauf nach dem Agardiffusionstest (modif. AATCC-Test Methode 90, 1970) gegen die unten aufgeführten 7 Testorganismen geprüft.

Bakterien :

Staphylococcus aureus ATCC 6 538
Escherichia coli NCTC 8 196
Proteus mirabilis NCTC 8 309
Pseudomonas aeruginosa NCTC 8 060

Fungi :

Candida albicans ATCC 10 259
Trichophyton mentagrophytes ATCC 9 533
Aspergillus niger ATCC 6 275.

Die Testplatten bestehen aus einem Zweischichtenagar, d.h. aus einer Grundschicht aus unbeimpftem Nähragar und einer Deckschicht aus angeimpftem Nähragar (Nutrient-Agar für Bakterien, Mycophil-Agar für Fungi).

Die filtrierte Keimsuspension wird auf eine erstarrte Grundschicht gegossen und nach dem Erstarren der beimpften Schicht werden Rondellen zu 20 mm Durchmesser der behandelten Substrate aufgelegt. Die Bebrütung der Bakterien- und Candida-Platten erfolgt während 24 Stunden bei 37 °C, die Fungi-Platten werden während 3 bis 5 Tagen bei 28 °C inkubiert. Nach der Inkubation werden die Platten hinsichtlich Hemmzone ausgewertet. Bei fehlender Hemmzone wird der Bewuchs unter dem Prüfling mit der Lupe kontrolliert.

Die auf diese Weise geprüften Verbindungen der Formeln (10) bis (30) zeigen in Verbindung mit den verwendeten Substraten eine gute Wirkung gegen die verwendeten Bakterien und Pilze.

Beispiel 5

Rohpapier, das zu 90 % aus gebleichter Sulfitcellulose und 10 % aus Birke besteht, wird in der Leimpresse mit einer 0,25 %igen Lösung der Verbindung der Formel (10) in Methanol/Wasser 2 : 1 so imprägniert, dass die Gewichtszunahme 40 % beträgt.

Das getrocknete Papier enthält dann, bezogen auf sein Eigengewicht, 0,1 % Wirkstoff.

Zur Prüfung der Wirkung gegen Bakterien werden Rondellen zu 10 mm Durchmesser des imprägnierten Papiers auf Brain Heart Infusion-Agar-Platten gelegt, die mit Staphylococcus aureus vorbeimpft sind. Die Platten werden hierauf 24 Stunden bei 37 °C bebrütet.

Zur Prüfung der Wirkung gegen Pilze werden Rondellen zu 25 mm Durchmesser auf Mycophil-Agar-Platten gelegt und anschliessend mit Aspergillus niger beimpft. Die Platten werden dann 72 Stunden bei 30 °C bebrütet.

Beurteilt wird einerseits die um die Papier-Rondellen auftretende Hemmzone (HZ in mm) und andererseits das mikroskopisch feststellbare Wachstum (W in %) unter bzw. auf den Rondellen. Die geprüfte Verbindung zeigt eine gute Wirkung gegen die verwendeten Testkeime.

Werden die Verbindungen der Formeln (11) bis (30) statt der Verbindung der Formel (10) verwendet, kommt man zu ähnlichen Ergebnissen.

Beispiel 6

Auf einem Zweiwalzenstuhl wird folgende Mischung bei 150 °C während 20 Minuten ausgewalzt :

100,00 g Polyvinylchlorid
19,20 g Di-(2-äthyl-hexyl-phthalat)
27,00 g Di-(2-äthyl-hexyl-sebacat)
1,50 g Ba/Cd-Laurat
0,25 g Stearinsäure
3,10 g einer der Verbindungen der Formeln (10) bis (30)

Der Walzenabstand wird so eingestellt, dass 1 mm dicke Felle entstehen, die anschliessend während

20 Minuten bei 165 bis 170 °C mit 1 400 $kg/cm^2$ verpresst werden.

Zur Prüfung der Wirkung gegen Bakterien werden Rondellen zu 10 mm Durchmesser aus dem gewalzten Weich-Polyvinylchlorid ausgestanzt und auf Brain Heart Infusion-Agar-Platten gelegt, die mit Staphylococcus aureus vorbeimpft sind. Die Platten werden hierauf 24 Stunden bei 37 °C bebrütet.

Es wird kein Wachstum der Testkeime unter der Rondelle festgestellt, unabhängig davon, welche Wirkstoffverbindung verwendet wurde.

## Beispiel 7

Ein Muster von 140 g Baumwoll-Popeline wird bei 20 °C während 7 Minuten in einem Bad folgender Zusammensetzung imprägniert :

1 000 ml Wasser

2,7 ml Wäscheweichspülflotte (enthaltend 7 % einer Mischung von Di-octadecyl- und Di-hexadecyldimethyl-ammoniumchlorid)

1 g einer der Verbindungen der Formeln (10) bis (30)

Das so behandelte Gewebemuster wird bis zu einer Flottenaufnahme von 100 % abgequetscht und anschliessend bei 45 °C getrocknet.

Zur Prüfung der Wirkung gegen Bakterien werden Rondellen des imprägnierten Gewebes mit einem Durchmesser von 20 mm auf Brain Heart Infusion-Agar-Platten gelegt, die mit Staphylococcus aureus vorbeimpft sind. Die Platten werden hierauf 24 Stunden bei 37 °C bebrütet.

Es wird kein Wachstum des Testkeimes unter der Rondelle festgestellt, unabhängig davon, welche der Wirkstoffverbindungen verwendet wurde.

## Beispiel 8

Durch Mischen der folgenden Bestandteile wird ein emulgierbares Konzentrat hergestellt :

10 Teile einer der Verbindungen der Formeln (10) bis (30)

68 Teile Xylol

10 Teile Dimethylformamid

12 Teile grenzflächenaktive Verbindung

Das Konzentrat wird vor den Anwendung mit Wasser auf die 50- bis 500-fache Menge verdünnt. In der so erhaltenen Emulsion werden Holz, Sägemehl oder Cellulosefasern getränkt, wodurch sie gegen Bakterien- und Pilzbefall geschützt sind.

## Beispiel 9

Durch Mischen der folgenden Bestandteile wird ein öllösliches Konzentrat hergestellt :

20 Teile einer der Verbindungen der Formeln (10) bis (30)

40 Teile Aethylenglykolmonoäthyläther

10 Teile Dimethylformamid

30 Teile Xylol

Das erhaltene Konzentrat wird einer Anstrichfarbe bzw. einem Schneidöl derart zugemischt, dass die Farbe bzw. das Oel 0,1 % an Phenolester enthalten. Es wird dadurch ein Schutz vor Bakterien- und Pilzbefall erreicht, unabhängig davon, welche Wirkstoffverbindung eingesetzt wurde.

## Beispiel 10

Das gemäss Beispiel 8 hergestellte Konzentrat wird mit Wasser auf die 10- bis 100-fache Menge verdünnt und dem Kreislaufwasser in einer Maschine zur Papierherstellung so zugefügt, dass die Konzentration an Trihalogenphenolester 10 bis 200 ppm beträgt. Dadurch wird die sonst auftretende Schleimbildung wirkungsvoll unterdrückt.

## Beispiel 11

Das gemäss Beispiel 8 hergestellte emulgierbare Konzentrat wird mit Wasser auf das 200- bis 400-fache verdünnt.

Quadratische Prüfkörper aus Birkenholz mit einer Seitenlänge von 5 cm und einer Dicke von 5 mm werden 2 Minuten in die Emulsion getaucht und 24 Stunden bei Raumtemperatur getrocknet. Sodann werden die Proben auf die Oberfläche von Agarplatten gelegt. Auf die Agarplatten und die Proben werden Sporensuspensionen von Aspergillus niger gesprüht. Die Pilze werden 2 Wochen bei einer Luftfeuchtigkeit von 95 % und einer Temperatur von 28 °C inkubiert.

Im Vergleich zu unbehandelten Prüfkörpern wird eine starke Wachstumshemmung der Keime festgestellt, und zwar unabhängig davon, welche Wirkstoffverbindung im emulgierbaren Konzentrat enthalten war.

Beispiel 12

a) 8,95 g einer der Verbindungen der Formeln (10) bis (19), (22) und (24) bis (30) werden in 120 ml Aethylenglykolmonoäthyläther gelöst und in eine wässrige Mischung eingerührt, die 150 g eines Hydrophobiermittels auf Basis einer zirkonsalzhaltigen Paraffin-Emulsion und 1,5 ml Essigsäure (80 %) enthält. Die Suspension wird mit Wasser auf 1 Liter aufgefüllt.

b) 8,95 g einer der Verbindungen der Formeln (10) bis (19), (22) und (24) bis (30) werden in 120 ml Aethylenglykolmonoäthyläther gelöst und in eine wässrige Mischung eingerührt, die 50 g eines Hydrophobiermittels auf Basis von Hexamethylolmelaminäther, modifiziert mit Stearinsäure und Triäthanolamin, kombiniert mit Paraffin, 6,3 ml Essigsäure und 2,5 g Aluminiumsulfat (57-60 %) enthält. Die Suspension wird mit Wasser auf 1 Liter aufgefüllt.

Textilgewebestücke aus Baumwolle, Baumwolle/Polyester 67/33 und aus Polyacrylnitril werden mit den gemäss a) und b) erhaltenen Suspensionen foulardiert (Flottenaufnahme 70 %), anschliessend 10 Minuten bei 120 °C getrocknet, 4 1/2 Minuten bei 150 °C kondensiert und über Nacht bei Raumtemperatur auskondensieren gelassen.

Die nach dem vorstehend beschriebenen Verfahren ausgerüsteten Textilien werden, nachdem sie einem Spray-Test und einem Xenon-Licht-Test unterworfen worden waren, einem Schimmelschutztest nach DIN 53 931 unterworfen. Als Keime werden verwendet : Aspergillus niger ATCC 6 275, Chaetomium globosum ATCC 6 205 und Penicillium funiculosum ATCC 9 644. Als Nährmedien werden Hafer-Malz-Agar und Mineralsalz-Zellulose-Agar verwendet. Der Test ergibt, dass die geprüften Verbindungen der Formeln (10) bis (19), (22) und (24) bis (30) auf den ausgerüsteten Geweben eine sehr gute Schimmelschutzwirkung hervorrufen.

**Ansprüche**

1. Halogenierte Phenolester der Formel

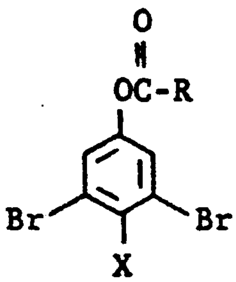

oder

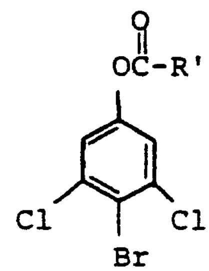

worin X Chlor oder Fluor und R Wasserstoff, Alkyl mit 1 bis 22 C-Atomen, Alkenyl mit 2 bis 22 C-Atomen, unsubstituiertes oder mit Chlor- oder Bromatomen substituiertes Benzyl oder unsubstituiertes oder mit Alkyl oder Alkoxy mit jeweils 1 bis 4 C-Atomen, Carboxy, Chlor und/oder Brom substituiertes Phenyl bedeuten.

2. Phenolester gemäss Anspruch 1 der Formel

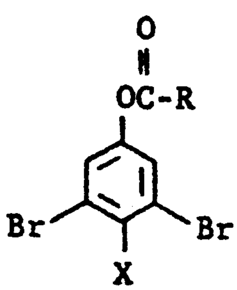

worin X und R wie in Anspruch 1 definiert sind.

3. Phenolester gemäss Anspruch 1 der Formel

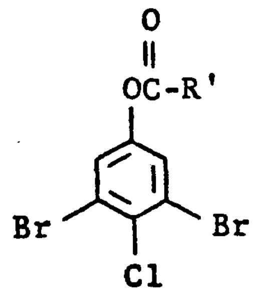

oder

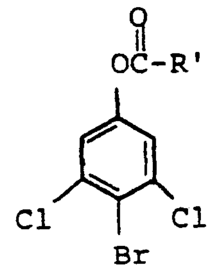

,

worin R' Alkyl mit 1 bis 22 C-Atomen, Alkenyl mit 2 bis 22 C-Atomen, Phenyl oder Benzyl bedeutet.

4. Phenolester gemäss Anspruch 3 der Formel

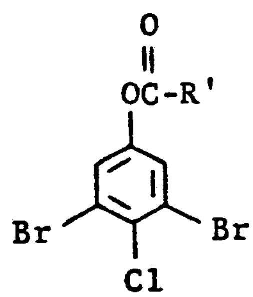

worin R' wie in Anspruch 3 definiert ist.

5. Phenolester gemäss Anspruch 1 der Formel

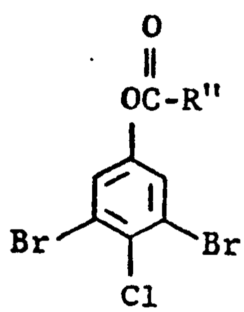

oder

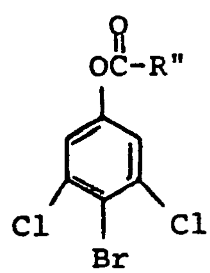

,

worin R" Alkyl mit 10 bis 22 C-Atomen oder Alkenyl mit 10 bis 18 C-Atomen bedeutet.

6. Phenolester gemäss Anspruch 5 der Formel

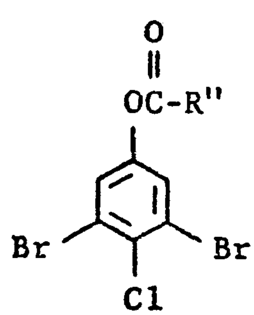

worin R" Alkyl mit 10 bis 22 C-Atomen oder Alkenyl mit 10 bis 18 C-Atomen bedeutet.

7. Antimikrobielles Mittel, enthaltend einen oder mehrere in den Ansprüchen 1 bis 6 definierte Phenolester.

8. Antimikrobielles Mittel gemäss Anspruch 7, enthaltend 0,1 bis 20 % an Phenolester, bezogen auf das Gesamtmittel, das zusätzlich noch Wasser, Lösungsmittel und/oder übliche Hilfsstoffe wie Netzmittel, Komplexbildner, Duftstoffe, Weichmacher, Füllstoffe, weitere antimikrobielle Verbindungen und/oder Appreturmittel enthalten kann.

9. Verfahren zum Schützen von organischen oder anorganischen Materialien vor dem Befall durch Mikroorganismen, dadurch gekennzeichnet, dass man den zu schützenden Materialien einen oder mehrere im Anspruch 1 definierte Phenolester einverleibt oder auf die Oberfläche dieser Materialien aufbringt.

10. Verfahren gemäss Anspruch 9 zum Schützen von Substraten organischer Herkunft vor durch Pilze und Bakterien hergerufener Verrottung und vor Schimmelbefall.

11. Verfahren gemäss Anspruch 10 zum Schützen von Holz, Holzspänen und Sägemehl vor dem Befall durch Pilze und Bakterien.

12. Verfahren gemäss Anspruch 11, dadurch gekennzeichnet, dass man auf das Holz pro Quadratmeter 0,1 bis 10 g eines im Anspruch 1 definierten Phenolesters aufbringt.

13. Verfahren gemäss Anspruch 10 zum Schützen von Textilfasern vor dem Befall durch Mikroorganismen, insbesondere vor Bakterien und Pilzen, die Verrottung und Schimmelbildung hervorrufen.

14. Verfahren gemäss Anspruch 13, dadurch gekennzeichnet, dass man die Textilfasern mit einer einen im Anspruch 1 definierten Phenolester enthaltenden Lösung oder Dispersion, die gegebenenfalls noch in der Färbereipraxis übliche Hilfsmittel enthalten kann, nach dem Ausziehverfahren oder dem Foulardverfahren imprägniert.

15. Verfahren gemäss Anspruch 14, dadurch gekennzeichnet, dass man den phenolester in einer Menge von 100 bis 10'000, vorzugsweise 200 bis 5'000 ppm, bezogen auf das zu schützende Textilmaterial, auf letzteres aufbringt.

**Claims**

1. A halogenated phenol ester of the formula

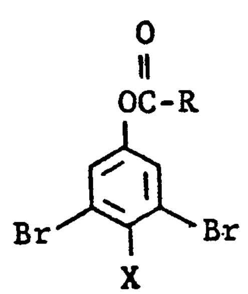

or

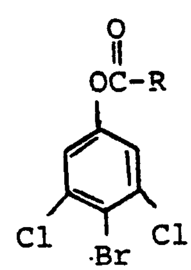

,

wherein X represents chlorine or fluorine and R represents hydrogen, alkyl of 1 to 22 carbon atoms, alkenyl of 2 to 22 carbon atoms, benzyl which is unsubstituted or substituted by chlorine or bromine atoms, or phenyl which is unsubstituted or substituted by alkyl or alkoxy, each of 1 to 4 carbon atoms, carboxyl, chlorine and/or bromine.

2. A phenol ester according to claim 1 of the formula

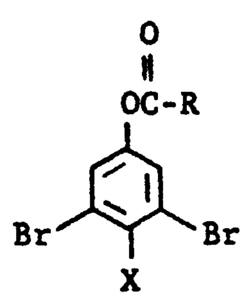

wherein X and R are as defined in claim 1.

3. A phenol ester according to claim 1 of the formula

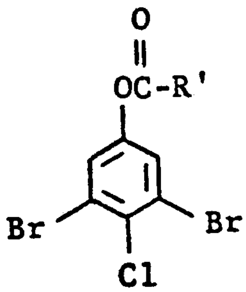

or

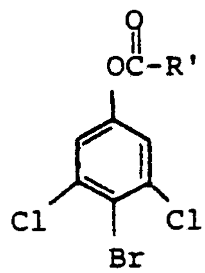

,

wherein R′ represents alkyl of 1 to 22 carbon atoms, alkenyl of 2 to 22 carbon atoms, phenyl or benzyl.

4. A phenol ester according to claim 3 of the formula

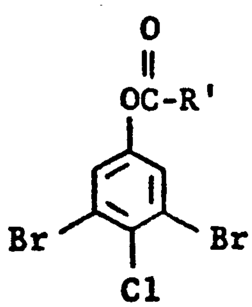

,

wherein R′ is as defined in claim 3.

5. A phenol ester according to claim 1 of the formula

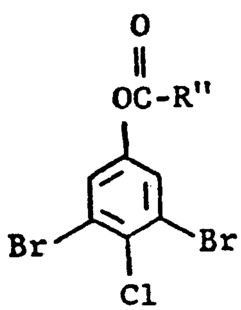

or

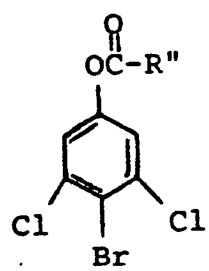

,

wherein R″ represents alkyl of 10 to 22 carbon atoms or alkenyl of 10 to 18 carbon atoms.

6. A phenol ester according to claim 5 of the formula

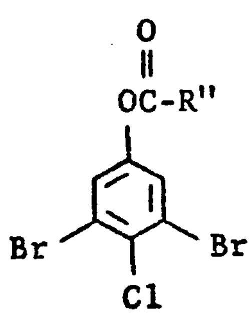

,

wherein R″ represents alkyl of 10 to 22 carbon atoms or alkenyl of 10 to 18 carbon atoms.

7. An antimicrobial composition containing one or more of the phenol esters defined in claims 1 to 6.

8. An antimicrobial composition according to claim 7, which contains 0.1 to 20 % of phenol ester, based on the total composition, and which can additionally contain water, solvent and/or conventional assistants, such as wetting agents, chelating agents, aromatic substances, plasticisers, fillers, further antimicrobial compounds and/or finishing agents.

9. A method of protecting organic and inorganic material from attack by microorganisms,

characterised in that one or more phenol esters as defined in claim 1 are incorporated in the materials to be protected or applied to the surface thereof.

10. A method according to claim 9 for protecting substrates of organic origin from rot and mildew induced by fungi and bacteria.

11. A method according to claim 10 for protecting wood, wood shavings and sawdust from attack by fungi and bacteria.

12. A method according to claim 11, characterised in that, per square metre, 0.1 to 10 g of a phenol ester as defined in claim 1 is applied to the wood.

13. A method according to claim 11 for protecting textiles from attack by microorganisms, especially from bacteria and fungi that cause the formation of rot and mildew.

14. A method according to claim 13, characterised in that the textiles are impregnated by the pad or exhaust method with a solution or dispersion which contains a phenol ester as defined in claim 1 and which can additionally contain assistants conventionally employed in the dyeing industry.

15. A method according to claim 14, characterised in that the phenol ester is applied to the textile fabric in an amount of 100 to 10 000 ppm, preferably 200 to 5 000 ppm, based on the weight of said fabric.

**Revendications**

1. Esters phénoliques halogénés de formule

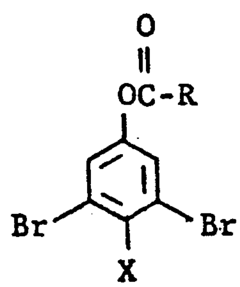

ou

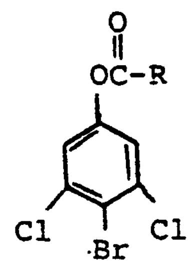

dans laquelle X est du chlore ou du fluor et R est de l'hydrogène, un groupe alkyle contenant 1 à 22 atomes de carbone, alcényle contenant 2 à 22 atomes de carbone, benzyle non substitué ou substitué par des atomes de chlore ou de brome ou phényle non substitué ou substitué par des groupes alkyle ou alcoxy comportant chacun 1 à 4 atomes de carbone, carboxy, par du chlore et/ou du brome.

2. Esters phénoliques selon la revendication 1, de formule

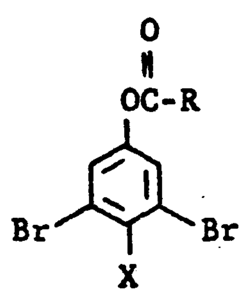

dans laquelle X et R sont tels que définis dans la revendication 1.

3. Esters phénoliques selon la revendication 1, de formule

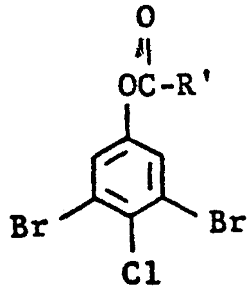

ou

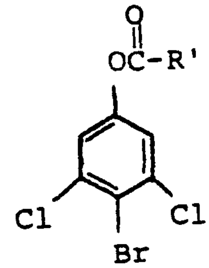

où R′ désigne un groupe alkyle contenant 1 à 22 atomes de carbone, alcényle contenant 2 à 22 atomes de carbone, phényle ou benzyle.

4. Esters phénoliques selon la revendication 3, de formule

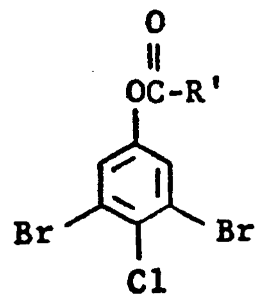
,

dans laquelle R′ est tel que défini dans la revendication 3.

5. Esters phénoliques selon la revendication 1, de formule

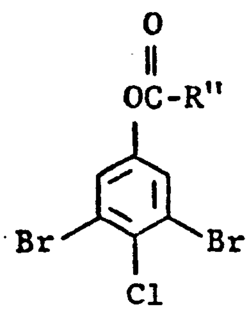
ou
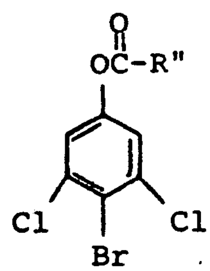
,

où R″ désigne un reste alkyle contenant 10 à 22 atomes de carbone ou alcényle contenant 10 à 18 atomes de carbone.

6. Esters phénoliques selon la revendication 5, de formule

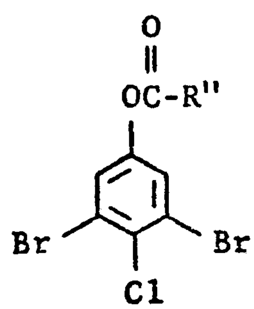
,

dans laquelle R″ désigne un reste alkyle contenant 10 à 22 atomes de carbone ou alcényle contenant 10 à 18 atomes de carbone.

7. Agent antimicrobien contenant un ou plusieurs des esters phénoliques définis dans les revendications 1 à 6.

8. Agent antimicrobien selon la revendication 7, contenant 0,1 à 20 % d'ester phénolique, sur la base de la totalité de l'agent, qui peut contenir en outre de l'eau, des solvants et/ou des adjuvants usuels tels que des agents mouillants, des complexants, des parfums, des émollients, des charges, d'autres composés antimicrobiens et/ou des agents d'apprêt.

9. Procédé de protection des matières organiques ou minérales de l'attaque par des micro-organismes, caractérisé par le fait qu'on incorpore aux matières à protéger ou qu'on dépose sur la surface de ces matières un ou plusieurs esters phénoliques tels que définis dans la revendication 1.

10. Procédé selon la revendication 9 de protection de substrats d'origine organique de la putréfaction provoquée par les champignons et les bactéries et de l'attaque par les moisissures.

11. Procédé selon la revendication 10 de protection du bois, des copeaux de bois et de la sciure de bois de l'attaque par les champignons et les bactéries.

12. Procédé selon la revendication 11, caractérisé par le fait qu'on applique sur le bois, par mètre carré, 0,1 à 10 g d'un ester phénolique tel que défini dans la revendication 1.

13. Procédé selon la revendication 10 de protection des fibres textiles contre l'attaque par les micro-organismes, notamment les bactéries et les champignons qui provoquent la putréfaction et la formation de moisissures.

14. Procédé selon la revendication 13, caractérisé par le fait qu'on imprègne les fibres textiles avec une solution ou une dispersion contenant un ester phénolique tel que défini dans la revendication 1, qui peut contenir éventuellement encore des adjuvants usuels dans la pratique de la teinture, selon le procédé d'épuisement ou de foulardage.

15. Procédé selon la revendication 14, caractérisé par le fait qu'on applique l'ester phénolique sur la matière textile à protéger en une quantité de 100 à 10 000, de préférence de 200 à 5 000 ppm, sur la base de ladite matière textile.